# EUROPÄISCHE PATENTSCHRIFT

(11) **EP 0 468 965 B1**
(45) Veröffentlichungstag und Bekanntmachung des Hinweises auf die Patenterteilung: **13.04.1994**
(21) Anmeldenummer: 90901789.9
(22) Anmeldetag: 20.01.1990
(51) Int. Cl.: B60R 22/18

(54) **GURTHALTER FÜR EINEN SICHERHEITSGURT**
SAFETY-BELT HOLDER
SUPPORT DE CEINTURE DE SECURITE

(30) Priorität: 22.04.1989 DE 3913284
(43) Veröffentlichungstag der Anmeldung: 05.02.1992
(73) Patentinhaber: AUDI AG, 85045 Ingolstadt (DE)
(72) Erfinder: KRAMMEL, Horst, D-8071 Wettstetten (DE); KOTHE, Ernst-Robert, D-8079 Kinding (DE)
(74) Vertreter: Engelhardt, Harald
(86) Internationale Anmeldenummer: EP9000113
(87) Internationale Veröffentlichungsnummer: WO9012708

(56) Entgegenhaltungen:
- EP-A- 209 175
- AU-B-73 294 /87
- DE-A- 2 924 144
- FR-A- 2 333 524

## Beschreibung

Die Erfindung betrifft einen Gurthalter für einen Sicherheitsgurt nach dem Oberbegriff des Anspruchs 1.

Ein übliches und allgemein bekanntes Sicherheitsgurtsystem besteht aus einer karosseriefest angeordneten Aufrollautomatik und aus einem davon ausgehenden Gurt, der an einem weiteren Befestigungspunkt seitlich eines Fahrzeuginsassen befestigt ist. Am Gurt ist verschiebbar eine Lasche gehalten, die in ein Gurtschloß auf der gegenüberliegenden Seite eines Fahrzeuginsassen eingesteckt werden kann, wobei der Gurt aus der Aufrollautomatik schräg über den Brustbereich und über den Beckenbereich eines Fahrzeuginsassen gezogen wird. Durch die Feder in der Aufrollautomatik bleibt der Gurt gespannt und am Körper eines Fahrzeuginsassen anliegend. Solche Gurtanordnungen sind sowohl für die Vordersitze als auch an der Rücksitzbank bekannt.

Ein allgemeines Problem bei solchen Gurtsystemen besteht darin, die aus Sicherheitstechnischen Gründen optimale Lage des Gurts bei unterschiedlich großen Personen anzupassen. Dazu ist es beispielsweise bekannt, bei einer Gurtanordnung für die Vordersitze den Umlenkpunkt des Gurts an der B-Säule höhenverstellbar auszugestalten. Entsprechende Anordnungen bei Gurtsystemen für die Rücksitzbank sind dagegen wegen der dort anderen konstruktiven Gegebenheiten schwieriger durchzuführen. Beispielsweise ist es aus der gattungsbildenden DE-A 29 50 068, bekannt, eine Aufrollautomatik im Bereich hinter der Rücksitzlehne anzuordnen und den Gurt über einen fest und unveränderlich angebrachten, über der Oberkante der Rücksitzlehne liegenden Schlitz umzulenken. Eine solche Anordnung ist offenbar nur für relativ große Personen gut geeignet. Für kleinere Personen führt der Gurt zuweit oben über den Halsbereich, wodurch bei einem Aufprall Halsverletzungen durch den Gurt möglich sind. Zudem ist der Tragekomfort des Gurts stark eingeschränkt, da dieser im Halsbereich scheuert.

Bei einer anderen, bekannten Anordnung (US-A-3 909 041) wird der obere Anlenkpunkt des Gurtes von der Seitenwand des Fahrzeugs weg mehr nach innen im Bereich der hinteren Hutablage verlegt. Dadurch soll ein günstigerer Gurtverlauf über den Brustbereich einer Person erreicht werden. Eine Anpassung an unterschiedlich große Personen ist aber auch hier nicht möglich. Ersichtlich ist auch hier der Tragkomfort gering, da der Gurt unmittelbar über die Rücksitzlehne von hinten her über den Schulterbereich in Halsnähe verläuft.

Bei den modernen Gurtsystemen mit Aufrollautomatik wird ständig eine gewisse Federspannung auch auf den angelegten Gurt übertragen, so daß dieser zwar nachgebend, aber mit ständig leichtem Druck am Körper anliegt. Dieser Druck kann besonders im Schulter- und Halsbereich als unangenehm empfunden werden, insbesondere dann, wenn der Gurt in der Höhe nicht optimal eingestellt ist. Deshalb wurden bereits für die Sicherheitsgurte der Vordersitze Gurthalter aus flexiblem Material vorgeschlagen, die am Befestigungspunkt der B-Säule mit angebracht sind und den Gurt mit einem federnden Arm etwas aus dem Halsbereich abhalten.

Weiter sind ähnliche Gurthalter bei zweitürigen Fahrzeugen mit breiten Türen, insbesondere bei Coupés, bekannt, bei denen der Gurtbefestigungspunkt an der B-Säule weit hinten liegt und nur mit Mühe erreichbar ist. Auch dort ist es bekannt, über flexible Arme den Gurt etwas weiter in Richtung der Frontsitze nach vorne zu führen und abzustützen.

Aufgabe der Erfindung ist es demgegenüber, einen Gurthalter für einen Sicherheitsgurt mit Aufrollautomatik an einer Rücksitzbank eines Fahrzeugs zu schaffen, der eine sicherheitstechnisch günstige Trageposition für unterschiedlich große Personen ermöglicht und zudem den Tragkomfort verbessert.

Diese Aufgabe wird mit den Merkmalen des Anspruchs 1 gelöst.

Gemäß Anspruch 1 ist ein Gurthalter für einen Sicherheitsgurt mit Aufrollautomatik in einem Kraftfahrzeug vorgesehen, wobei die Aufrollautomatik in einem Bereich hinter der Lehne einer Rücksitzbank angebracht ist, d.h. der Sicherheitsgurt für Fahrzeuginsassen auf der Rücksitzbank bestimmt ist. Der von der Aufrollautomatik ausgehende Sicherheitsgurt verläuft von hinten nach vorne über den Bereich der Oberseite der Lehne. Im Bereich hinter der Lehne und etwa in der Höhe der Oberseite der Lehne liegt der Fußpunkt eines Gurthalters, der im wesentlichen als länglicher Arm ausgebildet ist. An diesem Fußpunkt ist der Arm des Gurthalters über ein Gelenk mit dem Fahrzeugaufbau einseitig verbunden, wobei die Gelenkachse senkrecht steht. Über dieses Gelenk ist somit der Gurthalter bzw. dessen Arm etwa horizontal verschwenkbar. Dabei erstreckt sich der Arm des Gurthalters von seinem Fußpunkt ausgehend nach vorne. Am vorderen, freien Ende ist eine Führung angebracht, durch die der Sicherheitsgurt beweglich verläuft.

Mit einer solchen Gurthalteranordnung wird erreicht, daß der von hinten her über die Schulter eines Fahrzeuginsassen verlaufende Sicherheitsgurt einen vorderen Umlenkungspunkt am freien Ende des Gurthalters erhält, der in Fahrzeugquerrichtung beweglich bzw. schwenkbar ist. Dieser Gurtumlenkpunkt an der Führung des Gurthalterarms weicht somit mehr zur Fahrzeugseitenwand hin aus, wenn eine breitschultrige Person angegurtet ist oder wenn die Rücksitzbank mit drei Personen voll besetzt ist. Andererseits bewegt sich der Umlenkpunkt am Gurthalterarm mehr zur Fahrzeugmitte hin, wenn ihm dazu durch eine schmälere Person die Möglichkeit gegeben wird. Dadurch wird einerseits die Führung des Sicherheitsgurtes am Körper verbessert und der Tragekomfort erhöht.

Nach Anspruch 2 wird eine funktionell und optisch gute Lösung dadurch erreicht, daß die Aufrollautomatik unter einer hinteren Abdeckung angebracht ist. Dadurch verläuft der Sicherheitsgurt von der Aufrollautomatik schräg nach oben und wird vorteilhaft über das Gelenk hinweg in den Bereich über die Oberseite der Lehne geführt.

Besonders vorteilhaft ist es, wenn das Gelenk mit einer überdrückbaren Rasteinrichtung gemäß Anspruch 3 versehen ist. Diese Rasteinrichtung soll bei unterschiedlichen Schwenkwinkeln eingreifen und den Gurthalterarm in entsprechenden Schwenkstellungen halten. Dies trägt besonders zu einer Komfortverbesserung bei, da dann der Gurt im Schulter- und Halsbereich nicht unmittelbar anliegend getragen werden muß, sondern durch den eingerasteten Schwenkarm ein Freiraum möglich ist. Die Rasteinrichtung soll nur so stark eingestellt sein, daß der Schwenkarm ohne Kraftanstrenung in eine beliebige Schwenkstellung gebracht werden kann. Andererseits soll die Einstellung so schwergängig sein, daß die Rasteinrichtung nicht schon von der Federspannung der Aufrollautomatik überdrückbar ist. Bei einem Aufprall wird in jedem Fall die Rasteinrichtung soweit überdrückt, daß sich der Gurt an der Person in gewünschter Weise anlegt.

Nach Anspruch 4 wird die Rasteinrichtung am einfachsten mit Hilfe einer federbelasteten Kugel ausgeführt, die in entsprechende Ausnehmungen als Rastpositionen eingreift. Auch andere bekannte Rastmechanismen sind hier möglich.

Eine weitere, wesentliche Funktions- und Komfortverbesserung wird mit den Merkmalen des Anspruchs 5 erreicht. Dabei wird der Arm des Gurthalters über ein zweites Gelenk auch nach oben verschwenkbar, wodurch der Gurthalter bzw. sein Umlenkpunkt am freien Ende des Gurthalterarms sowohl in einer Fahrzeugquerrichtung als auch in der Höhe verstellbar ist. Zweckmäßig wird gemäß Anspruch 6 diese zweite Gelenkachse zur Bildung eines Kreuzgelenks im Bereich der ersten Gelenkachse am Fußpunkt des Gurthalters vorgesehen. Das freie Ende des Gurthalters mit seiner Umlenkung weicht somit selbsttätig auch in der Höhe aus, wenn eine größere Person auf der Rücksitzbank angegurtet ist. Für diese Schwenkbewegung nach oben ist kein Rastmechanismus zwingend erforderlich, es kann jedoch auch hierbei ein Rastmechanismus vorgesehen sein. Ohne Rastmechanismus legt sich der Gurthalter durch sein Eigengewicht in an sich gewünschter Weise im unbelasteten Zustand auf die Oberseite der Sitzlehne an.

Nach Anspruch 7 werden die Gelenke optisch günstig mit einem Deckel mit schlitzförmiger Öffnung abgedeckt.

Mit den Merkmalen des Anspruchs 8 wird eine vorteilhafte, konkrete Ausbildung der Gelenke beansprucht. Zudem soll der Gurthalterarm breit ausgeführt sein, so daß der von der Aufrollautomatik kommende Sicherheitsgurt darauf aufliegend nach vorne geführt wird.

Die Merkmale des Anspruchs 9 ergeben eine vorteilhafte Ausbildung des Gurteinlaufs am hinteren Ende des Arms für eine faltenfreie Führung.

Da der Gurthalter mit seinem freien vorderen Ende im unbelasteten Zustand auf der Oberseite der Lehne liegen soll, ist dort nach Anspruch 10 eine nach unten weisende kleine Erhebung als Polsterauflage angebracht. Diese Erhebung soll nach allen Seiten abgerundete Flächen haben. Dadurch wird der Polsterstoff geschont und die waagrechte Schwenkbewegung bei aufliegendem Gurthalter nicht behindert.

Die Führung am vorderen, freien Ende des Gurthalterarms ergibt mit den Merkmalen des Anspruchs 11 eine verwindungsfreie Führung für den Sicherheitsgurt ohne Behinderung.

Um ein Verdrehen des Sicherheitsgurts zu vermeiden, ist es besonders vorteilhaft, eine Art von Nachlaufeffekt am vorderen, drehbaren Führungskopf mit den Merkmalen des Anspruchs 12 dadurch zu erzeugen, daß die Drehachse gegenüber der Richtung des Arms schräg nach oben geneigt ist.

Anhand eines Ausführungsbeispiels wird die Erfindung mit weiteren Einzelheiten, Merkmalen und Vorteilen näher erläutert.

Es zeigen
- Fig. 1: einen Längsschnitt durch eine prinzipielle Anordnung eines Gurthalters mit einer Aufrollautomatik,
- Fig. 2: eine Vergrößerung des Längsschnitts durch den Gurthalter gemäß Fig. 1,
- Fig. 3: eine Draufsicht auf die Darstellung gemäß Fig. 2.

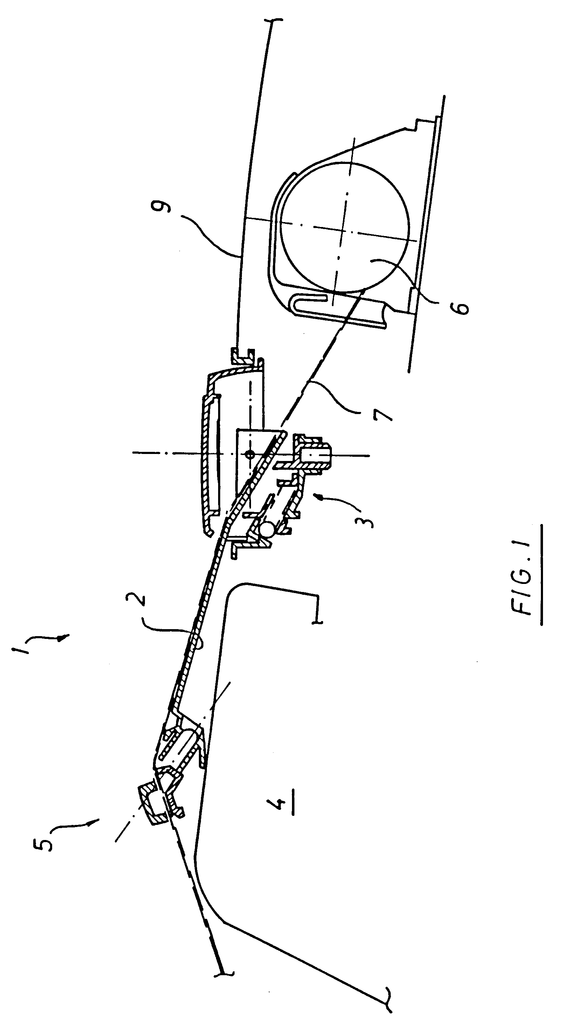

In Fig. 1 ist die prinzipielle Anordnung eines Gurthalters 1 dargestellt, der im wesentlichen aus einem länglichen Arm 2 besteht, der einseitig über eine Gelenkanordnung 3 mit dem Fahrzeugaufbau hinter einer Rücksitzlehne 4 verbunden ist. An der nach vorne gerichteten Seite des Arms befindet sich ein drehbarer Kopf 5.

Ausgehend von einer Aufrollautomatik 6 verläuft ein Sicherheitsgurt 7 schräg von unten her durch eine Ausnehmung in der Gelenkanordnung 3 über dem Arm 2 nach vorne zum Kopf 5, wo er geführt ist und sich weiter über die Oberkante der Rücksitzlehne 4 nach vorne zum Schulterbereich einer (nicht dargestellten) Person erstreckt.

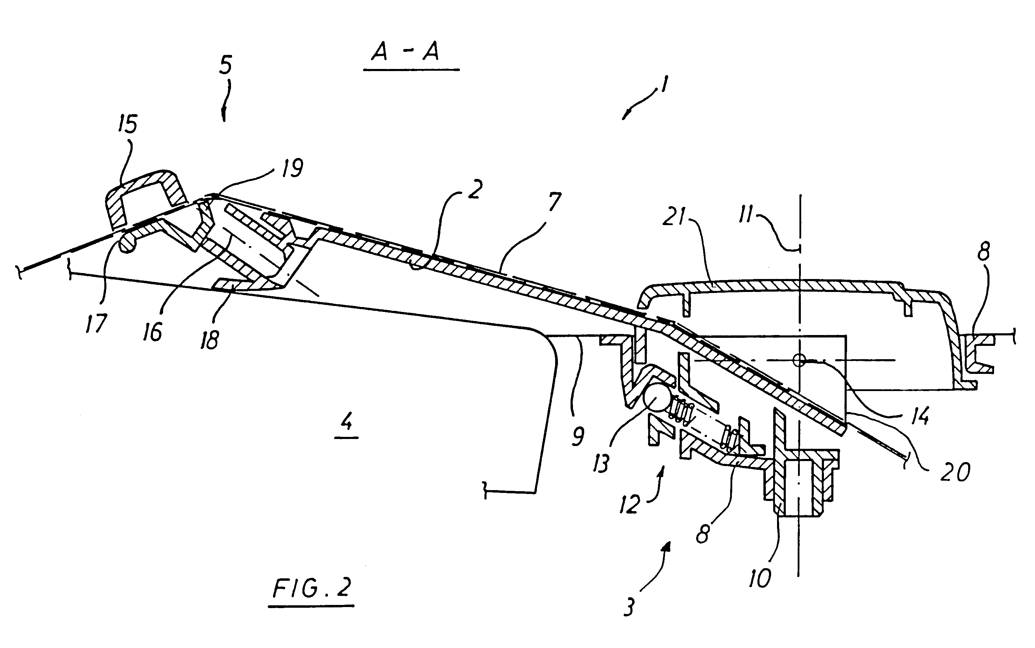

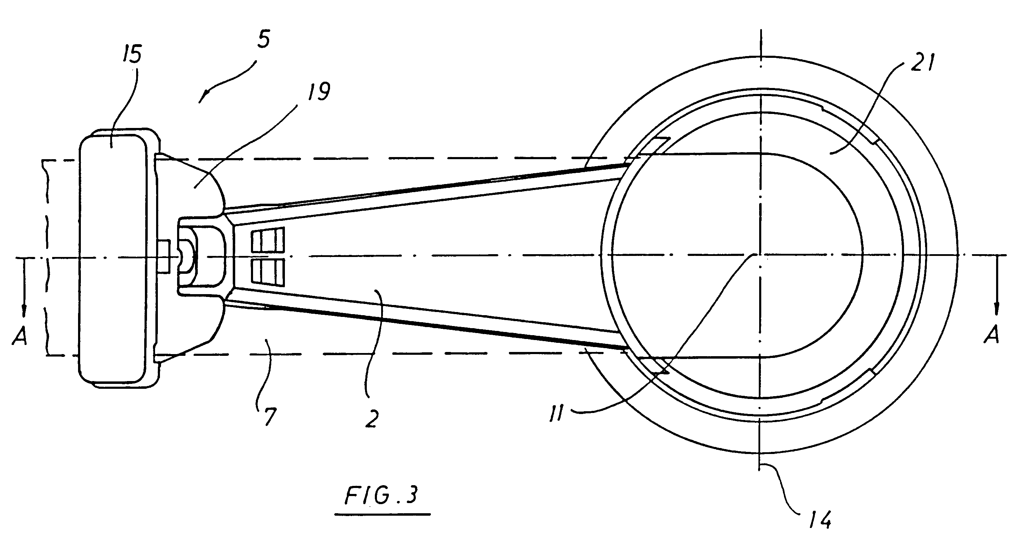

Der Gurthalter wird im einzelnen anhand der vergrößert dargestellten Fig. 2 und 3 näher erläutert:

Der Arm des Gurthalters ist entsprechend der Darstellung der Fig. 2 und 3 flach und breit ausgebildet, wobei der Sicherheitsgurt 7 darauf liegt und geführt ist. Am hinteren Ende ist der Arm jedoch nicht flach und breit ausgeführt, sondern durch einen trapezförmig in einer etwa senkrechten Ebene geformten Gurteinlauf 20 ausgebildet, Der Sicherheitsgurt 7 verläuft bei geradem Auslauf über den unteren, geraden Schenkel des Trapezes eben und bei um die vertikale Achse gedrehtem Zustand wird die scheinbar längere Seite des umgelenkten Gurtes 7 über den schrägen Schenkel des Trapezes faltenfrei umgeleitet.

Die Gelenkanordnung 3 für den Arm 2 besteht aus zwei Gelenken, wobei das erste Gelenk aus einem Bauteil mit zylindrischer Aufnahme 8 in der Hutablage 9 hinter der Rücksitzlehne 8 besteht, in die ein Bauteil mit einer topfförmigen Buchse 10 eingesetzt ist. Diese Buchse 10 ist um eine vertikale Achse 11 in der Aufnahme 8 zusammen mit dem daran befestigten Arm 2 verdrehbar.

Zur Festlegung des Arms in verschiedenen Schwenkstellungen ist eine überdrückbare Rasteinrichtung 12 vorgesehen, die aus einer federbelasteten Kugel 13 besteht, die in Ausnehmungen entsprechend unterschiedlichen Schwenkstellungen eingreift.

Die Gelenkanordnung 3 enthält ein zweites Gelenk, das dadurch gebildet ist, daß der Arm 2 am Bauteil mit der Buchse 10 über eine quer und horizontal liegende Achse 14 schwenkbar befestigt ist. Dadurch kann der Arm 2 in gewissen Grenzen nach oben geschwenkt werden.

Die Gelenkanordnung 3 ist mit Hilfe eines etwa kugelsegmentförmigen Deckels 21 abgedeckt. Dieser Deckel 21 hat vorne einen etwa gurtbreiten Ausschnitt und bildet zusammen mit dem Arm 2 eine schlitzförmige Öffnung, durch die der Sicherheitsgurt 7 nach vorne geführt ist.

Die als Kopf 5 ausgebildete Führung am vorderen freien Ende des Arms 2 besteht im wesentlichen aus einem Kopfteil 19, das von oben her von einem Bügel 15 umfaßt wird, unter dem der Sicherheitsgurt 7 auf dem Kopfteil 19 und dem Arm 2 aufliegend verläuft.

Der gesamte Kopf 5 mit dem Bügel 15 ist drehbar über eine schräg nach oben und vorne geneigte Achse 16 mit dem Arm 2 verbunden. Dabei liegt die vordere Kante 17 des Kopfteils 19, über die der Sicherheitsgurt 7 verläuft, unterhalb der Richtung der Drehachse 16, so daß der Sicherheitsgurt 7 über eine Art von Nachlauf ständig in der gewünschten Richtung nach schräg unten und vorne gehalten wird.

Zur Schonung des Polsterstoffes an der Oberseite der Rücksitzlehne 4 ist am Kopf 5 eine nach unten weisende kleine Erhebung als Polsterauflage 18 angeformt.

Die dargestellte Gurthalteranordnung hat folgende Funktion:
Wenn sich ein Fahrgast, der auf der hinteren Rücksitzbank 4 befindet, angurten will, zieht er am Sicherheitsgurt 7, wobei sich dieser aus der Aufrollautomatik 6 abrollt. Der Sicherheitsgurt 7 wird dabei über den Schulterbereich gezogen, wobei durch die Gurthalteranordnung eine Anpassung und Einstellung erfolgt. Je nach der Sitzposition und Statur des Fahrgastes stellt sich der Gurthalter 1 durch eine Schwenkbewegung um die vertikale Achse 11 ein, wobei die Rasteinrichtung 12 überdrückbar ist. Über diese Funktion kann auch ein unangenehm im Halsbereich anliegender Gurt vom Körper etwas weggeschwenkt werden, wobei diese Stellung mit Hilfe der Rasteinrichtung dann beibehalten wird. Eine weitere Anpassung an die Größe eines Fahrgastes erfolgt durch eine Schwenkbewegung um die horizontale Achse 14, wobei beispielsweise bei größeren Personen der Arm 2 selbsttätig nach oben abgehoben wird, so daß der Sicherheitsgurt 7 in einem angepaßten und günstigeren Verlauf über den Schulterbereich eines Fahrgasts geführt wird.

## Patentansprüche

1. Gurthalter (1) für einen Sicherheitsgurt (7) mit Aufrollautomatik (6) in einem Kraftfahrzeug, wobei,
die Aufrollautomatik (6) in einem Bereich hinter der Lehne (4) einer Rücksitzbank angebracht ist,
dadurch gekennzeichnet,
daß der von der Aufrollautomatik (6) ausgehende Sicherheitsgurt (7) von hinten nach vorne über den Bereich der Oberseite der Lehne (4) verläuft,
daß im Bereich hinter der Lehne (4) und etwa in der Höhe der Oberseite der Lehne (4) der Fußpunkt eines Arms (2) eines Gurthalters (1) liegt und der Arm (2) des Gurthalters (1) über ein Gelenk (8, 10) mit etwa senkrecht stehender Achse (11) dort mit dem Fahrzeugaufbau einseitig und schwenkbar verbunden ist,
daß sich der Arm (2) des Gurthalters (1) nach vorne erstreckt und an seinem vorderen freien Ende eine Führung (5) aufweist, durch die der Sicherheitsgurt (7) beweglich verläuft.

2. Gurthalter nach Anspruch 1, dadurch gekennzeichnet, daß die Aufrollautomatik (6) unter einer hinteren Abdeckung (Hutablage 9) angebracht ist und der Sicherheitsgurt (7) über das Gelenk (8, 10) hinweg nach oben in den Bereich über die Oberseite der Lehne (4) geführt ist.

3. Gurthalter nach Anspruch 1 oder 2, dadurch gekennzeichnet, daß am Gelenk (8, 10) eine überdrückbare Rasteinrichtung (12) vorgesehen ist, die bei unterschiedlichen Schwenkwinkeln eingreift und den Arm (2) des Gurthalters (1) in entsprechenden Schwenkstellungen hält.

4. Gurthalter nach Anspruch 3, dadurch gekennzeichnet, daß die Rasteinrichtung (12) eine federbelastete Kugel (13) enthält, die in entsprechende Ausnehmungen als Rastpositionen eingreift.

5. Gurthalter nach einem der Ansprüche 1 bis 4, dadurch gekennzeichnet, daß der Arm (2) des Gurthalters (1) über ein zweites Gelenk mit etwa waagrechter und etwa in Fahrzeugquerrichtung liegender Achse (14) mit dem ersten Gelenk (8, 10) verbunden ist, so daß der Arm (2) des Gurthalters (1) bzw. die Führung (5) am vorderen freien Ende in einer vertikalen Ebene von einer etwa horizontalen Lage aus nach oben verschwenkbar ist.

6. Gurthalter nach Anspruch 5, dadurch gekennzeichnet, daß sich die waagrechte Achse (14) des zweiten Gelenks mit der senkrechten Achse (11) des ersten Gelenks schneidet und dadurch ein Kreuzgelenk gebildet ist.

7. Gurthalter nach einem der Ansprüche 1 bis 6, dadurch gekennzeichnet, daß das oder die Gelenke von einem etwa kugelsegmentförmigen Deckel (21) abgedeckt wird, der vorne einen etwa gurtbreiten Ausschnitt hat und mit dem Arm (2) zusammen eine schlitzförmige Öffnung bildet, durch die der Sicherheitsgurt (7) nach vorne geführt wird.

8. Gurthalter nach einem der Ansprüche 1 bis 7, dadurch gekennzeichnet, daß in der Hutablage (9) ein Bauteil mit zylindrischer Aufnahme (8) enthalten ist, in die zur Bildung des ersten Gelenks ein Bauteil mit topfförmiger Buchse (10) eingesetzt ist und
daß im Bauteil mit der Buchse (10) an einer querliegenden Achse (14) als zweites Gelenk der Arm des Gurthalters befestigt ist und
daß der Sicherheitsgurt (7) von der Aufrollautomatik (6) kommend schräg von unten her auf dem flachen und breiten Arm (2) aufliegend nach vorne heraus zum vorderen Ende (Führung 5) des Arms (2) geführt ist.

9. Gurthalter nach einem der Ansprüche 1 bis 8, dadurch gekennzeichnet, daß der Gurteinlauf (20) am hinteren Ende des Arms (2) trapezförmig in einer etwa senkrechten Ebene geformt ist, so daß der Sicherheitsgurt (7) bei geradem Auslauf über den unteren, geraden Schenkel des Trapezes eben verläuft und bei um die vertikale Achse gedrehtem Zustand die scheinbar längere Seite des umgelenkten Gurtes (7) über den schrägen Schenkel des Trapezes faltenfrei umgeleitet wird.

10. Gurthalter nach einem der Ansprüche 1 bis 9, dadurch gekennzeichnet, daß im vorderen Bereich des Gurthalters (1) bzw. seines Arms (2) eine nach unten weisende kleine Erhebung als Polsterauflage (18) für den Arm (2) aufgebracht ist.

11. Gurthalter nach einem der Ansprüche 1 bis 10, dadurch gekennzeichnet, daß die Führung am vorderen Ende des Armes (2) als ein drehbarer Kopf (5) ausgebildet ist, der von oben her zu beiden Seiten von einem Bügel (15) umfaßt wird, unter dem der Sicherheitsgurt (7) verläuft, auf einem Kopfteil (19) und dem Arm (2) aufliegend.

12. Gurthalter nach Anspruch 10 und 11, dadurch gekennzeichnet, daß die Drehachse (16) schräg nach oben geneigt ist und oberhalb der vorderen Kante (17) des Kopfteils (19), über die der Sicherheitsgurt (7) verläuft, liegt, so daß durch die Auflagekraft des Sicherheitsgurts (7) das nach vorne abgekröpfte Kopfteil (19) für den Sicherheitsgurt (7) immer in die gewünschte Richtung zum Gurtschloß hin nach schräg unten und vorne weist.

## Claims

1. Belt holder (1) for a safety belt (7) with an automatic retractor (6) in a motor vehicle, the automatic retractor (6) being mounted in a region behind the rest (4) of a back-seat bench, characterised in that the safety belt (7) extending from the automatic retractor (6) runs from the rear forwards over the region of the top side of the rest (4), in that the base point of an arm (2) of a belt holder (1) is located in the region behind the rest (4) and approximately level with top side of the rest (4), and the arm (2) of the belt holder (1) is connected to the vehicle body there on one side and pivotably via a joint (8, 10) having approximately vertical axis (11), and in that the arm (2) of the belt holder (1) extends forwards and, at its front free end, has a guide (5), through which the safety belt (7) runs movably.

2. Belt holder according to Claim 1, characterised in that the automatic retractor (6) is mounted under a rear cover (hat shelf 9) and the safety belt (7) is guided beyond the joint (8, 10) upwards into the region over the top side of the rest (4).

3. Belt holder according to Claim 1 or 2, characterised in that there is provided on the joint (8, 10) a press-releasable catch device (12) which engages at different pivot angles and which keeps the arm (2) of the belt holder (1) in corresponding pivoting positions.

4. Belt holder according to Claim 3, characterised in that the catch device (12) contains a spring-loaded ball (13) which engages into corresponding recesses as catch positions.

5. Belt holder according to one of Claims 1 to 4, characterised in that the arm (2) of the belt holder (1) is connected to the first joint (8, 10) via a second joint having an approximately horizontal axis (14) lying approximately in the transverse direction of the vehicle, so that the arm (2) of the belt holder (1) or the guide (5) at the front free end is pivotable in a vertical plane upwards from approximately a horizontal position.

6. Belt holder according to Claim 5, characterised in that the horizontal axis (14) of the second joint intersects the vertical axis (11) of the first joint and a cardan joint is thereby formed.

7. Belt holder according to one of Claims 1 to 6, characterized in that the joint or joints is or are covered by a cover (21) which is approximately in the form of a spherical segment and which has, at the front, a cutout approximately of the width of the belt and, together with the arm (2), forms a slot-shaped orifice, through which the safety belt (7) is guided forwards.

8. Belt holder according to one of Claims 1 to 7, characterised in that the hat shelf (9) contains a component with a cylindrical receptacle (8), into which a component having a pot-shaped bush (10) is inserted to form the first joint, and in that the arm of the belt holder is fastened in the component having the bush (10) on a transverse axis (14) as a second joint, and in that the safety belt (7), coming from the automatic retractor (6), is guided obliquely from below, so as to rest on the flattened wide arm (2), forwards and outwards to the front end (guide 5) of the arm (2).

9. Belt holder according to one of Claims 1 to 8, characterised in that the belt run-in (20) at the rear end of the arm (2) is shaped trapezoidally in an approximately vertical plane, so that the safety belt (7), with a straight run-out, runs in a plane manner over the lower straight leg of the trapezium, and, in a state rotated about the vertical axis, the visibly longer side of the deflected belt (7) is guided round in a crease-free manner over the oblique leg of the trapezium.

10. Belt holder according to one of Claims 1 to 9, characterised in that a downwardly pointing small elevation is formed as an upholstery steady (18) for the arm (2) in the front region of the belt holder (1) or of its arm (2).

11. Belt holder according to one of Claims 1 to 10, characterised in that the guide of the front end of the arm (2) is designed as a rotatable head (5) surrounded from above, on both sides, by a shackle (15), under which the safety belt (7) runs so as to rest on a head part (19) and the arm (2).

12. Belt holder according to Claims 10 and 11, characterised in that the axis of rotatation (16) is inclined obliquely upwards and is located above the front edge (17) of the head part (19), over which edge the safety belt (7) runs, so that, as a result of the bearing force of the safety belt (7), the forwardly bent head part (19) for the safety belt (7) always points obliquely downwards and forwards in the desired direction towards the belt buckle.

## Revendications

1. Appui de ceinture (1) pour une ceinture de sécurité (7) à enrouleur automatique (6) dans un véhicule automobile, l'enrouleur automatique (6) étant posé dans une région en arrière du dossier (4) de la banquette arrière,
caractérisé en ce que:
à sa sortie de l'enrouleur automatique (6), la ceinture de sécurité (7) s'étend d'arrière en avant audessus de la région du bord supérieur du dossier (4),
le point d'attache d'un bras (2) de l'appui de ceinture (1) est situé dans la région en arrière du dossier (4) et à peu prés à la hauteur du bord supérieur du dossier (4), et le bras (2) de l'appui de ceinture (1) y est fixé, d'un côté et de façon à pouvoir pivoter, à la carrosserie du véhicule au moyen d'une articulation (8, 10) à axe à peu près vertical (11),
le bras (2) de l'appui de ceinture (1) s'étend vers l'avant et présente, à son extrémité antérieure libre, un guide (5) à travers lequel la ceinture de sécurité (7) passe de façon mobile.

2. Appui de ceinture selon la revendication 1, caractérisé en ce que l'enrouleur automatique (6) est posé au-dessous d'un couvercle de coffre arrière (tablette de plage arrière 9) et la ceinture de sécurité (7) est guidée vers le haut, au-delà de l'articulation (8, 10), dans la région au-dessus du bord supérieur du dossier (4).

3. Appui de ceinture selon la revendication 1 ou 2, caractérisé en ce qu'il est prévu, sur l'articulation (8, 10), un dispositif à cran d'arrêt déblocable (12) qui s'enclenche dans différents angles de pivotement et qui maintient le bras (2) de l'appui de ceinture (1) dans des positions angulaires correspondantes.

4. Appui de ceinture selon la revendication 3, caractérisé en ce que le dispositif à cran d'arrêt (12) contient une bille (13) qui est sollicitée par un ressort et qui s'engage dans des creux correspondant aux positions de crantage.

5. Appui de ceinture selon l'une quelconque des revendications 1 à 4, caractérisé en ce que le bras (2) de l'appui de ceinture (1) est raccordé à la première articulation (8, 10) par l'intermédiaire d'une seconde articulation dont l'axe (14) est à peu prés horizontal et situé à peu prés dans la direction transversale du véhicule, de sorte que le bras (2) de l'appui de ceinture (1) ou le guide (5) à son extrémité antérieure libre puisse pivoter dans un plan vertical, vers le haut à partir d'une position à peu près horizontale.

6. Appui de ceinture selon la revendication 5, caractérisé en ce que l'axe horizontal (14) de la seconde articulation et l'axe vertical (11) de la première articulation se coupent, et il est ainsi formé une articulation à la Cardan.

7. Appui de ceinture selon l'une quelconque des revendications 1 à 6, caractérisé en ce que la ou les articulations sont masquées par un couvercle (21) ayant à peu près la forme d'une zone sphérique, qui présente vers l'avant une entaille ayant à peu prés la largeur de la ceinture et qui forme, avec le bras (2), une ouverture en fente à travers laquelle la ceinture de sécurité (7) est guidée vers l'avant.

8. Appui de ceinture selon l'une quelconque des revendications 1 à 7, caractérisé en ce que la tablette de plage arrière (9) contient un élément comportant un logement cylindrique (8) dans lequel est reçu, pour la formation de la première articulation, un élément comportant une douille en forme de godet (10),
en ce que le bras de l'appui de ceinture est fixé dans l'élément comportant la douille (10) sur un axe transversal (14) pour constituer la seconde articulation, et
en ce que la ceinture de sécurité (7), sortant obliquement de bas en haut de l'enrouleur automatique (6), est guidée vers l'avant en reposant sur le bras plat et large (2), jusqu'à l'extrémité antérieure (guide 5) du bras (2).

9. Appui de ceinture selon l'une quelconque des revendications 1 à 8, caractérisé en ce que l'entrée de ceinture (20) à l'extrémité arrière du bras (2) a la forme d'un trapéze dans un plan à peu près vertical, de sorte que, quand la ceinture de sécurité (7) sort en ligne droite, elle passe à plat au-dessus du côté inférieur rectiligne du trapèze et qu'en cas de pivotement autour de l'axe vertical, le côté apparemment plus long de la ceinture (7) qui tourne soit dévié sur le côté oblique du trapèze sans être replié.

10. Appui de ceinture selon l'une quelconque des revendications 1 à 9, caractérisé en ce qu'une petite surélévation dirigée vers le bas, servant d'appui (18) pour le bras (2) sur le coussin, est prévue dans la région antérieure de l'appui de ceinture (1) ou de son bras (2).

11. Appui de ceinture selon l'une quelconque des revendications 1 à 10, caractérisé en ce que le guide à l'extrémité avant du bras (2) est réalisé sous forme de tête pivotante (5) qui est enserrée des deux côtés, par le haut, par un étrier (15) au-dessous duquel la ceinture de sécurité (7) passe en reposant sur une pièce de tête (19) et sur le bras (2).

12. Appui de ceinture selon la revendication 10 ou 11, caractérisé en ce que l'axe de rotation (16) est incliné obliquement vers le haut et est situé au-dessus du bord antérieur (17) de la pièce de tête (19) sur laquelle passe la ceinture de sécurité (7), de sorte que, sous l'effet de la force d'appui de la ceinture de sécurité (7), la pièce de tête (19), coudée vers l'avant, pour la ceinture de sécurité (7) soit constamment orientée obliquement vers le bas et vers l'avant dans la direction désirée vers la boucle d'attache de la ceinture.
